# EUROPEAN PATENT APPLICATION

(11) **EP 4 826 298 A1**
(43) Date of publication of application: **21.10.2026**
(21) Application number: 25171151.1
(22) Date of filing: 17.04.2025
(51) Int. Cl.: F24D 3/10, F16K 1/52, F16K 5/04, F16K 31/50, F16K 31/53, F16K 37/00, F24D 19/10

(54) **FLOW DISTRIBUTION SYSTEM FOR DISTRIBUTING FLOW IN A HEATING SYSTEM**

(71) Applicant: Uponor Innovation AB, 737 61 Virsbo (SE)
(72) Inventor: HÄMÄLÄINEN, Janne, 12100 Oitti (FI); KILPELÄINEN, Julius, 15810 Lahti (FI); UOSUKAINEN, Mika, 15300 Lahti (FI); WESOLOWSKI, Jaroslaw, 52-230 Wroclaw (PL); PÖNKÄNEN, Sanna, 15160 Lahti (FI); TILTINEN, Pasi, 15160 Lahti (FI)
(74) Representative: Li Schrag, Yue

(57) **Abstract**

The present invention is related to a fluid distribution system for distributing a fluid in a heating system, in particular in an underfloor heating system It comprises:
a. a distribution valve including:
i. a tubular body having a hollow with two open ends apart from each other, wherein a fluid opening is provided on the circumferential surface for allowing the fluid entering into the hollow of the body, and wherein the fluid flows out of one of the open end;
ii. an elongated spindle mounted in the hollow of the body, wherein the spindle can be moved in the axial direction to control the flow rate of the flow entering into the body through the fluid opening; and
iii. a flow adjustment element mounted in the hollow of the body and operationally connected on the top of the spindle to move the spindle in the axial direction;

b. a pipe having a tubular socket formed on its circumferential surface, wherein for the operation the valve is inserted in the socket and the axial axis of the socket is perpendicular to the flow direction of the fluid flowing in the pipe.

The flow distribution system further comprises a tubular shut-off element mounted on the outer surface of the body and surrounds the fluid opening to completely close the fluid opening or open the fluid opening by rotational relative movement between the body and the shut-off element.

## Description

### FIELD OF THE INVENTION

The present invention is related to a flow distribution system for distributing a flow in a heating system, in particular an underfloor heating system.

### BACKGROUND OF INVENTION

Distribution valves are widely applied for the heating system. They are the essential element for adjusting the heating by varying the flow rate of the fluid flowing in the heating system. The flow rate of the valve can be adjusted manually or automatically.

EP 3 660 371 is related to a distributing valve including a flow meter for a liquid medium. It comprises an outer body with an inlet opening and an inner body. The inner body is arranged in the outer body such that it is exclusively axially displaceable. The inner body is alterable in its axial position by means of a rotatable adjusting nut. The inlet opening of the outer body is closable by the inner body. By adjusting the position of the inner body the flow rate can be set.

A heating system comprises normally multiple distribution valves. In particular, an underfloor heating system normally comprises several heating loops with different length of pipes. Thus, the pressures for different loops must be balanced. This can be achieved by setting different flow rates for different heating loops. For each heating loop, several distribution valves are required. During the commissioning of the heating system, there is a need to shut off the loops, thus, the valves must be closed one by one. After the commissioning, the valves must be opened again, and the preset flow rate must be set again for each of the valve. It is time consuming for the operator because the operator must rotate the knob to adjust the flow rate many turns until the valve is fully closed. Additionally, the preset flow rate value of the valves is lost because the valves are fully closed during the commissioning, since the valve has only one mechanism for closing the valve and for adjusting the flow rate. The preset flow rate values must first be memorized before commissioning and set again after the commissioning. This causes again additional effort and time.

### SUMMARY OF THE INVENTION

It is an objective of this invention to provide a distribution system for distributing fluids in a heating system with simple commissioning. In particular, it is an objective to provide a distribution system for distributing fluid in a heating system with a maintained preset flow rate during the commissioning.

According to the present invention, these objectives are achieved through the features of independent claims. In addition, further advantageous embodiments follow from the dependent claims and the description.

In the present invention, a fluid distribution system for distributing fluid in a heating system, in particular in an underfloor heating system comprises a distribution valve, a distribution conduit and a tubular shut-off element. The distribution valve includes a tubular body, an elongated spindle and a flow adjustment element. The body has a hollow with two open ends apart from each other, wherein a fluid opening is provided on the circumferential surface for allowing the fluid entering into the body. The flow first enters into the hollow of the body through the fluid opening and flows out of the hollow from one open end. The spindle is mounted in the hollow of the body, wherein the spindle can be moved in the axial direction to control the flow rate. The flow adjustment element is mounted in the hollow of the body and operationally connected on the top of the spindle to move the spindle in the axial direction. By this way, the spindle can be moved upwardly or downwardly in the hollow of the body. The distribution conduit features a tubular socket formed on its circumferential surface. The axial axis of the tubular socket is perpendicular to the axial axis of the distribution conduit. For the operation the valve is inserted in the socket and the axial axis of the socket is perpendicular to the flow direction of the fluid flowing in the distribution conduit. The tubular shut-off element is moveably mounted on the outer surface of the body and surrounds the fluid opening to completely close the fluid opening or open the fluid opening by rotational relative movement between the body and the shut-off element. The fluid opening can be covered by the shut-off element or exposed by the shut-off element.

Normally, a heating system or a loop of the heating system includes multiple valves. The flow rate of each valve is set manually to fulfill the heat requirement of the users. However, during commissioning several valves must be completely closed. In the known system, the valve has only one mechanism to set a flow rate as desired and to completely close the valve. Thus, closing the valve completely causes the loss of the preset flow rate values. The system of the present invention includes two independent mechanisms to be able to precisely set the flow rate by the flow adjustment element and to fully shut off the valve by the shut-off element. Especially, the shut off can be easily and quickly conducted by rotating the valve for a defined degree, for example 90 degree. The operation of the shut-off element is independent from the operation of the flow adjustment element. The shut-off element is applied to fully close or open the flow opening, while the flow adjustment element is applied to precisely set the flow rate. The flow rate adjustment is achieved by moving the spindle in an axial direction to adjust a gap between the spindle and the inner surface of the hollow of the body, especially the gap is positioned below the fluid opening. The shut off is realized by covering the fluid opening completely. Thus, even the fluid opening can be covered by the shut off element, the axial position of the spindle can be maintained such that the preset flow rate can be kept.

In a preferred variant, the shut-off element is a sleeve comprising a shut-off opening on the circumferential surface. The shut-off element has a simple design and can be manufactured with a low cost. Another advantage is that the assembling of the distribution system is simple and fast. Moreover, the diameter of the shut-off element is adapted to the diameter of the body of the valve.

In an advantageous variant, a positioning portion is formed on the inner surface of the socket and a positioning feature is provided on the outer surface of the body of the valve. For operation the positioning portion is engaged with the positioning feature for positioning the valve to the correct position for closing the valve. By this way, the valve can be quickly moved to the correct position to completely close the valve.

Preferably, the positioning portion is a recess, and the positioning feature is a protrusion. By rotating the body of the valve, the positioning protrusion can be pushed into the recess to correctly position the valve to a desired position at which the flow opening is completely covered by the shut-off element, in particular by the side surface of the shut-off element. Moreover, the recess and the protrusion are designed in a manner that the protrusion can be easily moved out of the recess or moved into the recess without additional means. For example, the recess has a rounded surface and/or the protrusion has a rounded surface.

In one variant, at least two recesses are provided as positioning portions, and one protrusion is provided as positioning feature. When a first recess is engaged with a first protrusion, the valve is completely closed since the flow opening is completely covered by the shut-off element. By rotating the valve further until a second recess is engaged with the first protrusion, the flow opening is aligned with the shut-off opening for allowing the maximum amount of flow entering into the body of the valve.

Preferably, four recesses are formed in the inner surface socket and two protrusions are formed on the outer surface of the body. In particular, two flow openings are formed on the valve body.

In a preferred variant, four recesses are symmetrically distributed on the inner surface of the socket in the circumferential direction and two protrusions are symmetrically distributed on the outer surface of the valve body in the circumferential direction. Rotating the valve body for 90 degrees, the valve can be quickly changed from the open state to the close state or visa verse.

In one variant, on the inner surface of the socket a seat is provided and on the outer surface of the shut-off element a flange is provided, when the shut-off element is received in the socket, the flange sits on the seat such that the shut-off element is received in the socket.

For assembling, the shut-off element can be first inserted into the socket and the valve is inserted into the shut-off element. In particular, the valve body is designed in a manner that in the assembled state, the vertical position of the flow opening is aligned with the vertical position of the shut-off opening.

Particularly, the seat is arranged at a position which is lower than the vertical position of the positioning portion. Thus, in the assembled state of the distribution system, the positioning portion is exposed to be able to be engaged with the positioning features of the valve.

In a preferred variant, the shut-off element is fixedly mounted in the socket and is not rotatable. For shut off the valve body is rotated, the shut-off element is fixed at the initial position.

In one variant, a fixing means is provided for clamping the valve in the socket. However, the fixing means does not influence the rotation of the valve but only fixes the vertical position of the valve in the socket.

In particular, the fixing means is a flexible clip. On the conferential surface of the socket two slots are provided such that the clip can be inserted into the slots in the horizontal direction and contact to the valve body.

In an advantageous variant, the inner surface of the body below the flow opening has a conical cross-section, wherein inner diameter of the inner surface reduces from the flow opening downwardly until a transition region, which is between the flow opening and the lower end of the body

Preferably, the end region of the spindle has a conical cross-section.

The region from the fluid opening to the lower opening of the hollow builds a flow channel for the fluid existing the hollow. The shape of the flow channel has a direct impact on the characteristic of the fluid flowing therein. Moreover, the shape of the spindle has a direct impact on the quantity of the fluid entering into the flow channel. In the known system, the flow channel is very narrow. This causes pressure loss in the heating system. Another disadvantage of the known valve is that the flow rate setting is nonlinear due to the geometry of the spindle and the hollow of the body. In the present invention, the conical spindle end region directs the flow immediately at the fluid opening without any unnecessary bends. Especially, the conical shape improves the linearity of the flow rate setting. The conical shape of the inner surface of the body below the fluid opening and the conical shape of the end region of the spindle can avoid opening the valve too quickly in order to achieve more accurate flow rate control at low flow rates.

In some embodiments, the flow adjustment element is designed based on a warm-gear principle.

In particular, the flow adjustment element comprises a shaft and a wheel gear, which are engaged with each other. The wheel gear is coupled to the spindle by threads. The rotation of the shaft drives the wheel gear to rotate to move the spindle in the axial direction.

In the known design, a knob is mounted on the top of the spindle. By rotating the knob, the spindle is moved in the axial direction. Adjustment of the flow rate requires the proper grip of the knob. In the heating system, multiple valves are mounted in the distribution conduit close to each other. It is difficult to access the knob between the valves for rotating it. In the present invention, the rotation axis of the shaft is perpendicular to the rotation axis of the wheel gear. By this way, the flow rate adjustment can be performed from the side of the valve which is much easier accessible. Additionally, applying the worm gear mechanism enables a higher gear ratio and results in a more precise control of the spindle movement.

In the present invention, the valve, the distribution conduit and the shut-off element are made in metal or in plastic. In particular, they can be manufactured by milling, injection molding and additive manufacturing.

### BRIEF DESCRIPTION OF THE DRAWINGS

In the following, a more particular description of the present invention is further described. The embodiments are described and explained with details with reference to accompanying drawings in which:
- Fig. 1: illustrates a three-dimensional view of a distribution system including a shut-off element;
- Fig. 2: illustrates a three-dimensional view of the system and the valve is opened;
- Fig. 3: illustrates a three-dimensional view of the system and the valve is fully closed;
- Fig. 4: illustrates a sectional view of a shut-off element;
- Fig. 5: illustrates a sectional view of the distribution conduit having the shut-off element mounted in a socket;
- Fig. 6: illustrates a front view of a first variant of the valve;
- Fig. 7: illustrates a sectional view of the first variant of the valve;
- Fig. 8: illustrates a three-dimensional view of the valve body and a shaft;
- Fig. 9: illustrates a sectional view of the flow adjustment element;
- Fig. 10: illustrates a three-dimensional view of a spindle;
- Fig. 11: illustrates a three-dimensional view of the valve;
- Fig. 12: illustrates a sectional view of the valve at open state;
- Fig. 13: illustrates a sectional view of the valve at a closed state;
- Fig. 14: illustrates a three-dimensional view of a second variant of the valve; and
- Fig. 15: illustrates a sectional view of the second variant of the valve.

### EXEMPLARY EMBODIMENTS

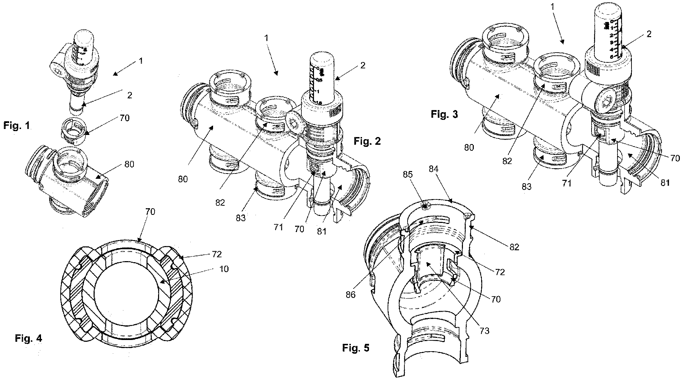

Figure 1 illustrates a three-dimensional view of a distribution system 1 comprising a valve 2, a shut-off element 70 and a distribution conduit 80. For operation, the shut-off element is first inserted in the distribution conduit and the valve is further into the distribution conduit in a manner that the shut-off element surrounds the valve, in particular the shut-off element surrounds a fluid opening provided on the valve. By changing the relative position of the valve and the shut-off element in the circumferential direction, the fluid opening is fully covered by the shut-off element or exposed to the fluid in the distribution conduit. When the fluid opening is fully covered by the shut-off element, the valve is fully closed, namely a shut-off state is achieved.

Figures 2 and 3 show the state at which the valve and the shut-off element are inserted in the distribution conduit. For the illustration, the distribution conduit is partially cut in these figures. A flow channel 81 is formed in the longitudinal direction of the distribution conduit. A top socket 82 and a bottom socket 83 are provided on the circumferential surface of the distribution conduit. The axial axis of the bottom socket and the top socket are aligned and is perpendicular to the flow channel. When the valve is inserted into the distribution conduit, a clip holds the valve to ensure the vertical position of the valve. The bottom socket is applied for connecting a connection nipple not shown in the figure. Pipe can be connected to the connection nipple as the outlet of the fluid.

The top socket 82 serves for receiving the shut-off element 70 therein to realize the quick shut-off function. The shut-off element features a shut-off opening 71 for allowing the fluid flowing in the flow channel to enter into the valve. Figure 2 shows that the flow opening of the valve is aligned with the shut-off opening of the shut-off element. Consequently, the flow flowing in the flow channel of the distribution conduit can enter into the valve through the shut-off opening and the fluid opening. In a preferred variant, the shut-off opening is larger than the fluid opening or have the same size as the fluid opening. However, the shut-off opening can also be smaller than the fluid opening.

In figure 3 the valve body is rotated to the shut-off position, for example rotating the valve for 90 degrees. As shown in figure 3, the shut-off element is not moved but the fluid opening is not visible anymore because it is hidden behind the side surface of the shut-off element. The fluid opening is fully covered by the side surface of the shut-off element. Additionally, a sealing is arranged on the inner surface of the shut-off element. At the shut-off position, the fluid opening is sealed by this sealing. Consequently, no flow can enter into the fluid opening, thus the valve is fully closed. Since the flow adjustment element is not adjusted, the flow rate preset value is maintained, even if the valve is fully closed.

Figure 4 illustrates a top view of the shut-off element 70 and the body 10. The shut-off element has a flange 72 for being carried by a seat of the top socket. In this figure, the seat cannot be seen because it is covered by the flange of the shut-off element.

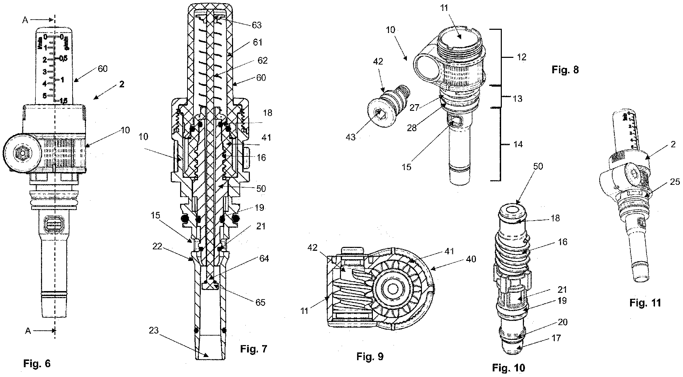

Figure 5 shows a three-dimensional view of the distribution conduit with a cut in the vertical direction. The shut-off element is inserted in the socket. On the inner surface of the socket a seat is formed to receive the flange of the shut-off element thereon. The socket comprises two slots 86 extending in the longitudinal direction, through which a clip can be inserted for clamping the valve in the defined vertical position. The top surface of socket 84 serves as a stop surface for the valve, when the valve is inserted in the socket. Additionally, a plurality of recesses 85 as the positioning portions are formed on the inner surface of the socket, which can be engaged with the protrusions as the positioning features formed on the outer surface of the body of the valve. These protrusions 30 are formed on the outer surface of the body of the valve as shown in figure 11. As shown in figure 5, a gasket 73 is provided on the side surface of the shut-off element for sealing the fluid opening of the valve, when the shut-off is in the shut-off state. It is also possible to arrange a sealing element on the valve, for example a sealing ring around the fluid opening.

Figure 6 shows a front view of a first variant of valve 2, in which a flow measuring device 60 is integrated. Figure 7 shows a sectional view cut along line A-A shown in figure 6. The valve comprises a tubular body 10, a spindle 50 and a flow adjustment element 40.

As shown in figure 8, the tubular body 10 has a hollow 11 and two open ends apart from each other. The body is preferably made in one piece and comprises an upper section 12, a coupling section 13 and a flow channel section 14.

The upper section serves as the housing of the flow adjustment element 40, which is based on the worm gear principle. As shown in the figure 9 the flow adjustment element includes a shaft 42 having a spiral thread and a toothed wheel 41. The shaft engages with the toothed wheel and drives it. In further, the shaft is provided with a hexagon slot 43 on one end surface such that the shaft can be rotated by a hex key. The upper region includes two hollow portions which are arranged perpendicular to each other but are connected inside. In one hollow portion the shaft is received and in another hollow portion the toothed wheel is inserted. Since these two hollow portions are inside connected, the spiral thread of the shaft is engaged with the toothed wheel as illustrated in figure 9. When the shaft is turned by the hex key, the shaft rotates, and its rotation drives the toothed wheel to rotate as well. The toothed wheel has a hollow as well for receiving the spindle therein and for engaging with the spindle to transfer the movement of the shaft to the spindle. On the inner surface of the toothed wheel threads are provided for engaging with the spindle.

The coupling section 13 serves mainly for positioning the valve in the correct vertical position in the top socket. The diameter of this section is smaller than the upper section but larger than the flow channel section. It allows the valve to be able to sit in the socket. As shown in figure 8, a groove for inserting a clip 27 is formed on the outer surface of the body in the coupling section. The groove is formed for receiving the clip to prevent the valve from being pulled out of the socket. Additionally, a valve sealing 28 is mounted on the outer surface.

The flow channel section 14 is part of the body, which starts from the fluid opening until the lower end of the valve. This part serves mainly for forming the valve flow channel inside the body. In the variant shown in the figure 8 two fluid openings 15 are formed. However, the number of fluid openings can vary.

As shown in figure 10, the spindle 50 has an elongated body. The spindle comprises an upper portion, a middle portion, and a spindle end portion 17. The upper portion starts with a straight portion from the top end and followed by the spindle thread for engaging with the toothed wheel. The middle portion is positioned below the spindle thread. The spindle end portion has a conical shape. Additionally, the middle portion of the spindle comprises a plurality of spindle wrings 26 formed for example as a protrusion on the outer surface of the spindle as anti-rotation element. On the inner surface of the body recesses are formed. When the spindle is inserted into the body, the spindle wings are received in the recesses to prevent the spindle rotating during the operation, especially when the toothed wheel is rotated to move the spindle in the axial direction.

Additionally, several O-rings as sealing elements are provided on the outer surface of the spindle for sealing. A first spindle O-ring 18 is arranged on the upper portion of the spindle to seal between the spindle and the inner surface of the toothed wheel. A second spindle O-ring 19 is arranged in the middle portion of the spindle to seal between the spindle and inner surface of the body. A third spindle O-ring 20 is provided on the lower portion of the spindle to seal between the spindle and the inner surface of the body. The spindle and the inner surface of the body are designed in a way that the sealing elements don't have to pass through any sharp edges during the movement of the spindle. This improves dramatically the duration of the sealing elements.

Figure 7 shows the valve in the assembled state. The spindle is operationally connected to the toothed wheel 41 and arranged below the toothed wheel. The spindle thread 16 is engaged with the inner threads formed on the inner surface of the toothed wheel. The rotation of the toothed wheel moves the spindle in the vertical direction through this engagement. The vertical position of the spindle defines the flow rate by regulating the gap between the inner surface of the body and the spindle. In the example shown in the figures two fluid openings are formed. The inner surface of the body located just below the fluid openings serves as a valve seat and are formed in a conical shape. It means that the inner diameter of the body decreases from the flow opening downwardly. In the variant shown in the figures, the section of the flow channel below the valve seat is widened until the valve end 23. This improves the measurement accuracy of the flow rate.

The conical shape of the spindle end is designed in a way to be complementary to the conical shape of the valve seat. Due to this special shape, the amount of the fluid flowing into the spindle can be controlled much precisely.

The variant shown in the figures 6 and 7 comprises also a measuring element 60 for determining the flow rate set and indicates it. The measuring element comprises a glass or a transparent plastic housing 61, a spring 62, an indicator 63 and a rod 64. The spring is arranged on the top of the toothed wheel. The rod is arranged through the hollow of the toothed wheel and the hollow of the spindle. The indicator is fixed on the top of the rod and a disk-shaped pin 65 is formed at the lower end of the rod. The indicator is for example a disc-liked element. If no fluid flows into the hollow of the body, the spring is released. If the fluid flows into the hollow of the body, the flow pushes the pin downwardly such that the rod having the indicator on it moves downwardly. Thus, the spring is compressed between the indicator and the top of the toothed wheel. On the glass housing, scales are marked. By this way, the vertical position of the indicator indicates the flow rate.

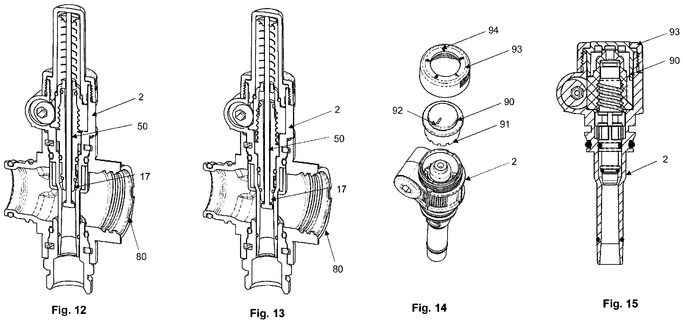

Figures 12 and 13 show the open and close state of the valve by positioning the spindle at different positions. In figure 11, the spindle end is almost in parallel to the fluid opening 15. This means that the spindle end portion is received in the valve seat. This position increases the gap between the inner surface of the body and the spindle for allowing a high amount fluid flowing therein. In figure 12, the gap between the inner surface of the body and the spindle is chopped, thus, no flow can enter into the flow channel.

Figures 14 and 15 show another variant in which no measuring element is integrated in the valve. Figure 14 is a three-dimensional view and figure 15 a sectional view. The valve is the same as shown in the first variant. A wheel positioning indicator 90 and a dial 93 are provided and mounted on the top of the toothed wheel. The wheel positioning indicator features a plurality of notch 91 on the bottom of the side surface. When the wheel positioning indicator is mounted on the toothed wheel, the notches are engaged with the teeth of the toothed wheel such that the rotation of the toothed wheel drives wheel position indicator to rotate. On the top surface of the wheel position indicator a marking 92 is provided to indicate the position of the wheel position indicator. Additionally, the dial is mounted on the top of the measuring cap but fixed on the body of the valve. As a result, only the wheel position indicator can rotate along with the toothed wheel not the dial. The marking on the wheel position indicator indicates the position of the wheel position indicator in the circumferential direction, which is related to the axial position of the spindle. Thus, the flow rate can be indirectly measured in this way. Each index on the top surface of the dial corresponds to a hydronic balancing pre-set value (Kv / Cv) of the valve. During hydronic balancing, the marking on the wheel position indicator is aligned with the index on the dial requested on the underfloor heating design.

### Reference List

- 1: fluid distribution system
- 2: distribution valve
- 10: body
- 11: hollow
- 12: upper section
- 13: coupling section
- 14: flow channel section
- 15: fluid opening
- 16: spindle thread
- 17: spindle end portion
- 18: first spindle O-ring
- 19: second spindle O-ring
- 20: third spindle O-ring
- 22: valve seat
- 23: valve end
- 25: positioning protrusion
- 26: spindle wing
- 27: groove for clip
- 28: first O-ring
- 40: flow adjustment element
- 41: toothed wheel
- 42: shaft
- 50: spindle
- 60: measuring device
- 61: glass
- 62: spring
- 63: indicator
- 64: rod
- 65: pin
- 70: shut-off element
- 71: shut-off opening
- 72: flange of the shut-off element
- 73: gasket of shut-off element
- 80: pipe
- 81: fluid channel
- 82: top socket
- 83: bottom socket
- 84: top surface of top socket
- 85: positioning recess
- 86: slot
- 90: wheel position indicator
- 91: notch
- 92: marking
- 93: dial
- 94: index

## Claims

1. A fluid distribution system for distributing fluid in a heating system, in particular in an underfloor heating system comprising:
a. a distribution valve (2) including:
i. a tubular body (10) having a hollow with two open ends apart from each other, wherein a fluid opening (15 is provided on the circumferential surface for allowing the fluid entering into the hollow of the body, and wherein the fluid flows out of one of the open end;
ii. an elongated spindle (50) mounted in the hollow of the body, wherein the spindle can be moved in the axial direction to control the flow rate of the flow entering into the body through the fluid opening; and
iii. a flow adjustment element (40) mounted in the hollow of the body and operationally connected on the top of the spindle to move the spindle in the axial direction;
b. a distribution conduit (80) having a tubular socket formed on its circumferential surface, wherein for the operation the valve is inserted in the socket and the axial axis of the socket is perpendicular to the flow direction of the fluid flowing in the pipe,
**characterized in that**
the fluid distribution system further comprises a tubular shut-off element (70) mounted on the outer surface of the body and surrounds the fluid opening to completely close the fluid opening or open the fluid opening by rotational relative movement between the body and the shut-off element.

2. The fluid distribution system according to claim 1, wherein the shut-off element is a sleeve comprising a shut-off opening on the circumferential surface.

3. The fluid distribution system according to claim 1 or 2, wherein a positioning portion (85) is formed on the inner surface of the socket and a positioning feature (25) is provided on the outer surface of the body, wherein for the operation the positioning portion is engaged with the positioning feature for positioning the valve to the correct position for closing the valve.

4. The fluid distribution system according to claim 3, wherein the positioning portion is a recess (85) and the positioning feature is a protrusion (30).

5. The fluid distribution system according to one of claims 1 to 4, wherein a first sealing is arranged in the inner surface of the shut-off element or on the outer surface of the valve for sealing the fluid in the closed state.

6. The fluid distribution system according to one of claims 1 to 5, wherein on the inner surface of the socket a seat is provided and on the outer surface of the shut-off element a flange is provided, when the shut-off element is received in the socket, the flange sits on the seat.

7. The fluid distribution system according to one of claims 1 to 6, wherein a fixing means is provided for clamping the valve in the socket.

8. The fluid distribution system according to one of claims 1 to 7, wherein the inner surface of the body below the flow opening has a conical cross-section, wherein inner diameter of the inner surface reduces from the flow opening downwardly.

9. The fluid distribution system according to one of claims 1 to 8, wherein the end region 17 of the spindle has a conical cross-section.

10. The fluid distribution system according to one of claims 1 to 9, wherein the flow adjustment element is designed based on a warm-gear principle.

11. The fluid distribution system according to claim 10, wherein the flow adjustment comprises a shaft (42) and a wheel gear (41), which are engaged with each other, wherein the wheel gear is coupled to the spindle by threads, and wherein the rotation of the shaft drives the wheel gear to rotate for moving the spindle in the axial direction.

12. The fluid distribution system according to one of the claims 1 to 11, wherein a wheel position indicator (90) is mounted on the top of the flow adjustment element and a dial (93) is mounted on the top of the wheel position indicator and fixed on the body of the valve, wherein the wheel position indicator can be rotated by flow adjustment element for indicating the flow rate.

13. The fluid distribution system according to claim 12, wherein a plurality of notches (91) are formed on the bottom of the side surface of the wheel position indicator for being engaged with the flow adjustment element.
